# EUROPÄISCHE PATENTSCHRIFT

(11) **EP 0 450 421 B1**
(45) Veröffentlichungstag und Bekanntmachung des Hinweises auf die Patenterteilung: **31.01.1996**
(21) Anmeldenummer: 91104488.1
(22) Anmeldetag: 22.03.1991
(51) Int. Cl.: C09B 45/16, D06P 1/10

(54) **Chromkomplexfarbstoffe**
Chrome-complexed dyes
Colorants complexes chromiphères

(30) Priorität: 04.04.1990 DE 4010782
(43) Veröffentlichungstag der Anmeldung: 09.10.1991
(73) Patentinhaber: BAYER AG, D-51368 Leverkusen (DE)
(72) Erfinder: Michna, Martin, Dr., W-5024 Pulheim (DE)

(56) Entgegenhaltungen:
- CH-A- 487 986
- DE-B- 1 619 649

## Beschreibung

Die vorliegende Erfindung betrifft neue Chromkomplexfarbstoffe, Verfahren zu ihrer Herstellung und ihre Verwendung zum Färben natürlicher oder synthetischer amidgruppenhaltiger Materialien.

In DE-A-1 619 649 sind bereits gemischte 2:1 Chromkomplexfarbstoffe beschrieben, deren bisphenylhaltige Azokomponente alkoxysubstituiert ist.

Aus CH-A-487 986 sind gemischte 2:1 Chromkomplexfarbstoffe bekannt, die eine phenyl-naphthyl-haltige Azokomponente besitzen, jedoch noch gewisse Nachteile in der Heißwasserechtheit aufweisen.

Gegenstand der Erfindung sind Chromkomplexfarbstoffe der Formel 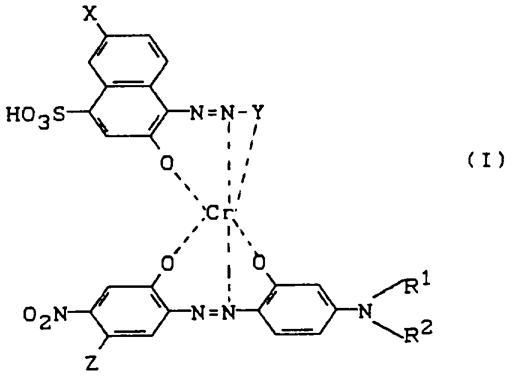 in welcher
- X: für Wasserstoff oder Nitro steht,
- R¹ und R: gleich oder verschieden sind und für gegebenenfalls substituiertes C₁-C₄-Alkyl stehen, wobei als Substituenten Chlor, Brom, Hydroxy, Sulfo, Sulfato oder C₁-C₄-Alkoxy infrage kommen,
- Y: für 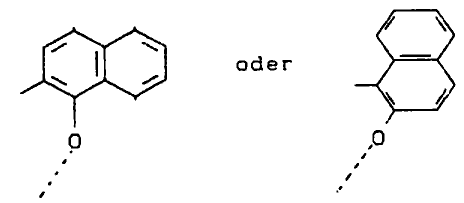 steht und
- Z: für Wasserstoff oder Chlor steht.

Beispiele für C₁-C₄-Alkyl in der Definition von R¹ und R sind Methyl, Ethyl, n-Propyl, i-Propyl, n-Butyl, s-Butyl, i-Butyl und t-Butyl.

Im Rahmen der Formel (I) bevorzugte Farbstoffe sind solche der Formel 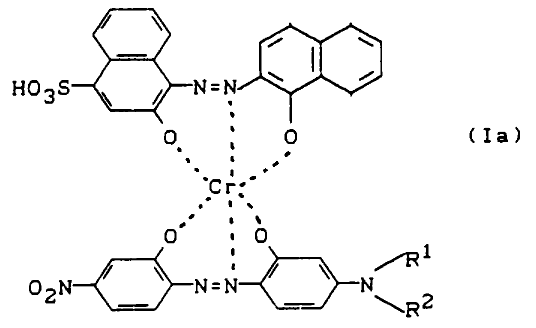 in welcher
R¹ und R die oben angegebene Bedeutung haben, vorzugsweise für Ethyl stehen.

Die neuen Farbstoffe der Formel (I) können hergestellt werden, indem man Azoverbindungen der Formel 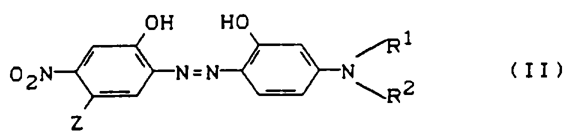 in welcher
R¹, R und Z die oben angegebene Bedeutung haben,
mit dem 1:1 Chromkomplex einer Azoverbindung der Formel 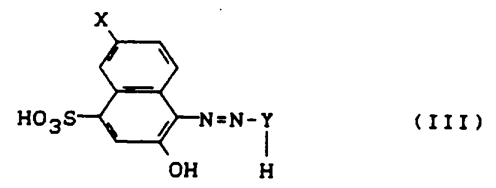 in welcher
X und Y die oben angegebene Bedeutung haben,
umsetzt.

Die Azoverbindungen (II) und (III) sind in bekannter Weise durch Kupplungsreaktionen zugänglich.

Die neuen Verbindungen der Formel (I) stellen wertvolle blaue Metallkomplexfarbstoffe mit sehr guten Echtheiten dar, die sich hervorragend zum Färben natürlicher oder synthetischer, amidgruppenhaltiger Materialien eignen.

Die Herstellung und Verwendung der neuen Chromkomplexfarbstoffe der Formel (I) soll anhand der folgenden Beispiele erläutert werden.

### Beispiel 1

0,45 Mol 2-Amino-5-nitrophenol wurden in 230 ml Wasser und 116 ml konzentrierter Salzsäure bei ca. 50°C gelöst. Man kühlte auf 15-20°C ab und tropfte eine Lösung von 31 g Natriumnitrit in Wasser zu. Nach einer Nachrührzeit von 30 Minuten wurde auf 0°C gekühlt und 0,49 Mol 3-(N,N-Diethylamino)-phenol eingetragen. Die gut gerührte Suspension wurde dann mit einer Lösung von 45 g Natriumhydroxyd in 120 ml Wasser versetzt. Man rührte 3 Stunden nach und stellte dann den pH-Wert mit Salzsäure auf pH 7 ein. In die Kupplungssuspension wurde der 1:1 Chromkomplex der Azoverbindung der Formel 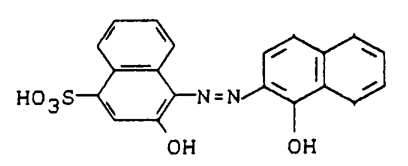 eingetragen und verrührt. Anschließend wurde auf 90-95°C erhitzt und der pH-Wert durch Zugabe von verdünnter Natronlauge bei pH 6-7 gehalten. Die erhaltene Lösung des Chrommischkomplexes wurde auf 70°C abgekühlt und durch Zugabe von Natriumchlorid der Farbstoff ausgefällt. Nach Filtration und Trocknung erhielt man einen Farbstoff der zum Färben von natürlichen und synthetischen Polyamiden verwendet werden kann.

### Beispiel 2

Analog zu Beispiel 1 wurde zunächst 2-Amino-5-nitrophenol mit 3-(N,N-Diethylamino)-phenol zur Azoverbindung gekuppelt und diese dann mit dem 1:1 Chromkomplex der Azoverbindung der Formel 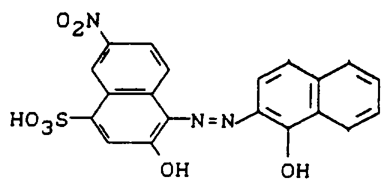 umgesetzt. Die weitere Reaktionsdurchführung und Aufarbeitung erfolgte analog zu Beispiel 1.

### Beispiel 3

Analog zu Beispiel 1 wurde 2-Amino-5-nitrophenol mit 3-(N,N-Diethylamino)-phenol zur Azoverbindung gekuppelt und diese dann mit dem 1:1 Chromkomplex der Azoverbindung der Formel 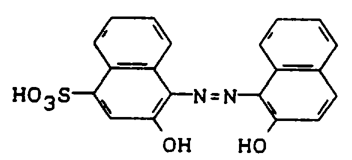 umgesetzt. Die weitere Reaktionsdurchführung und Aufarbeitung erfolgte analog zu Beispiel 1.

### Beispiel 4

0,45 Mol 2-Amino-5-nitrophenol und 0,49 Mol 3-(N,N-Dimethylamino)-phenol wurden unter den Bedingungen wie in Beispiel 1 beschrieben gekuppelt und dann mit dem 1:1 Chromkomplex der Azoverbindung der Formel 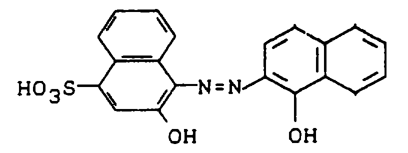 umgesetzt. Die weitere Reaktionsdurchführung und Aufarbeitung erfolgte analog zu Beispiel 1.

### Beispiel 5

0,45 Mol 2-Amino-4-chlor-5-nitrophenol und 0,49 Mol 3-(N,N-Diethylamino)-phenol wurden wie in Beispiel 1 beschrieben zu dem Azofarbstoff mit der Formel 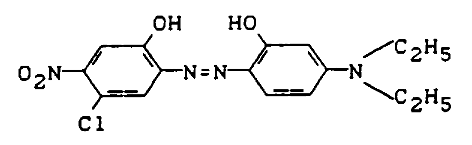 gekuppelt. Zu der Suspension des Farbstoffs gab man 0,45 Mol des 1:1 Chromkomplexes der Azoverbindung der Formel 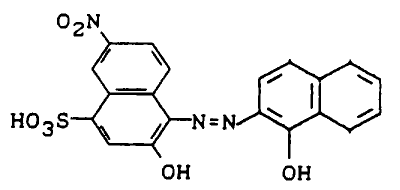 Die weitere Reaktionsdurchführung und Aufarbeitung erfolgt analog zu Beispiel 1.

## Patentansprüche

1. Chromkomplexfarbstoffe der Formel 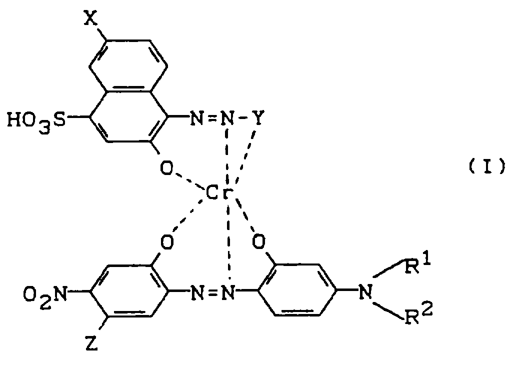 in welcher
X für Wasserstoff oder Nitro steht,
R¹ und R gleich oder verschieden sind und für gegebenenfalls substituiertes C₁-C₄-Alkyl stehen, wobei als Substituenten Chlor, Brom, Hydroxy, Sulfo, Sulfato oder C₁-C₄-Alkaxy infrage kommen,
Y für 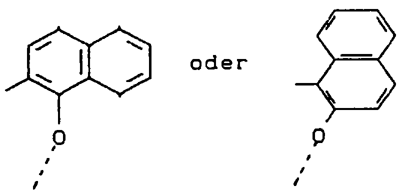 steht und
Z für Wasserstoff oder Chlor steht.

2. Farbstoffe des Anspruchs 1 der Formel

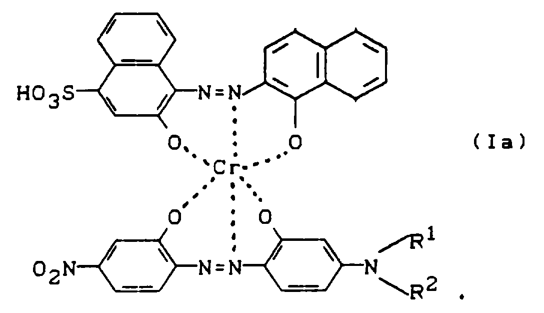

3. Farbstoffe gemäß Anspruch 2, worin R¹ und R für Ethyl stehen.

4. Verwendung der Farbstoffe gemäß den Ansprüchen 1-3 zum Färben natürlicher und synthetischer amidgruppenhaltiger Materialien.

## Claims

1. Chromium complex dyestuffs of the formula 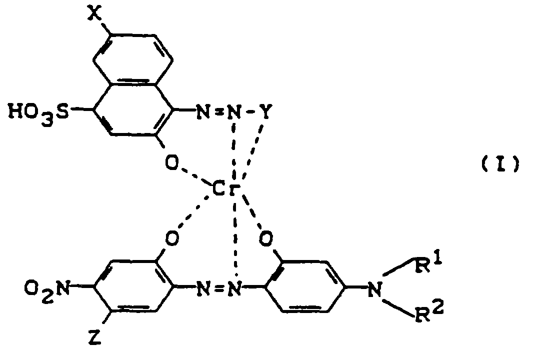 in which
X represents hydrogen or nitro,
R¹ and R are identical or different and represent optionally substituted C₁-C₄-alkyl, possible substituents being chlorine, bromine, hydroxyl, sulpho, sulphato or C₁-C₄-alkoxy,
Y represents 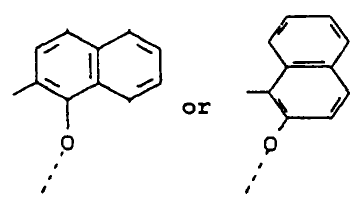 and
Z represents hydrogen or chlorine.

2. Dyestuffs of Claim 1 of the formula

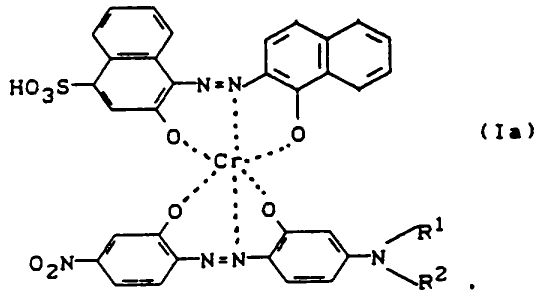

3. Dyestuffs according to Claim 2, wherein R¹ and R represent ethyl.

4. Use of the dyestuffs according to Claims 1-3 for dyeing naturally occurring and synthetic materials containing amide groups.

## Revendications

1. Colorants complexes de chrome de formule 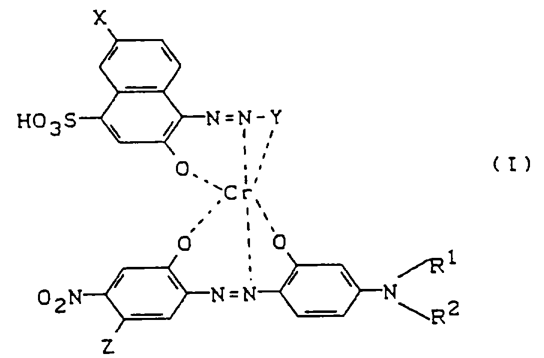 dans laquelle
X représente l'hydrogène ou un groupe nitro,
R¹ et R, ayant des significations identiques ou différentes, représentent chacun un groupe alkyle en C₁-C₄ éventuellement substitué, les substituants en question étant le chlore, le brome, des groupes hydroxy, sulfo, sulfato ou alcoxy en C₁-C₄,
Y représente 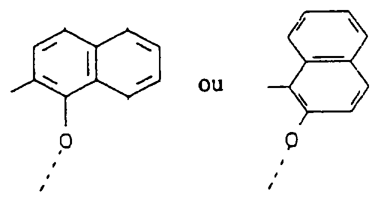 et
Z représente l'hydrogène ou le chlore.

2. Colorants de la revendication 1, de formule

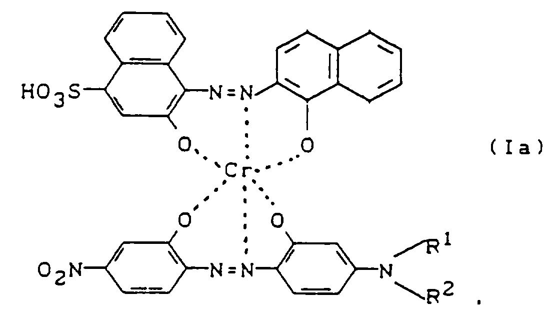

3. Colorants selon la revendication 2, pour lesquels R¹ et R représentent des groupes éthyles.

4. Utilisation des colorants selon les revendications 1 à 3, pour la teinture de matières naturelles et synthétiques contenant des groupes amides.
